# EUROPÄISCHE PATENTANMELDUNG

(11) **EP 1 069 408 A1**
(43) Veröffentlichungstag der Anmeldung: **17.01.2001**
(21) Anmeldenummer: 00810178.4
(22) Anmeldetag: 02.03.2000
(51) Int. Cl.: G01D 5/25, G01D 5/165, G01D 5/249, G01B 7/00, G01B 7/02

(54) **Messeinrichtung mit einem Balken und einem entlang diesem Balken bewegbaren Schieber**

(30) Priorität: 14.07.1999 CH 129599
(71) Anmelder: Kunststoffwerk AG Buchs, 9471 Buchs SG 1 (CH)
(72) Erfinder: Walser, Werner, CH-9472 Grabs (CH); Etter, Hansjorg, CH-9320 Arbon TG (CH); Grollmann, Peter, CH-9410 Heiden (CH)
(74) Vertreter: Kulhavy, Sava, Dipl.-Ing.

(57) **Zusammenfassung**

Die Messeinrichtung umfasst einen Balken (1) und einen entlang diesem Balken bewegbaren Schieber (10). Eine der Oberflächen des Balkens (1) ist mit einer Skala (7) mit zwei Bahnen (31,32) versehen. Die erste Bahn (31) ist als eine strukturierte bzw. codierte Bahn bestehend aus elektrisch leitenden und elektrisch nicht leitenden Materialabschnitten ausgeführt. Die zweite Bahn (32) umfasst unter anderem eine zusammenhängende Spur (36) aus einem Widerstandsmaterial. Der Schieber (10) weist eine Vorrichtung zur Abtastung der Skala (7) sowie eine Vorrichtung zur Verarbeitung der abgetasteten Informationen zu Messwerten auf. Die Vorrichtung zum Abtasten der Bahnen (31,32) umfasst Kontaktglieder (60;601,602,603), welche am Schieber (10) einerends befestigt und an die Verarbeitungsvorrichtung angeschlossen sind. Die freien Endpartien (63) der Kontaktglieder liegen auf den Spuren der Skalenbahnen auf.

## Beschreibung

Die vorliegende Erfindung betrifft eine Messeinrichtung mit einem Balken und mit einem entlang diesem Balken bewegbaren Schieber.

Solche Messeinrichtungen sind allgemein bekannt und sie werden auch als Schieblehren bezeichnet. Es sind auch Schieblehren bekannt, bei welchen das Abtasten der Lage des Schiebers gegenüber dem Balken auf elektrischem Wege erfolgt. Eine solche Schieblehre ist beispielsweise in DE-OL 33 24 578 offenbart. Die Oberfläche des Balkens dieser vorbekannten Schieblehre weist voneinander beabstandete Platten aus einem elektrisch leitenden Material auf. Diese Platten bilden eine Reihe, welche sich auf einer der Oberflächen des Balkens befindet und welche in der Längsrichtung des Balkens verläuft. Am Schieber sind entsprechende und ebenfalls voneinander beabstandete Platten aus einem elektrischen Material angebracht, welche an eine Auswertungsschaltung angeschlossen sind. Eine der Platten am Schieber bildet zusammen mit einer der Platten am Balken einen Kondensator. Die Platten sind so angeordnet und die Auswerteschaltung ist so ausgeführt, dass es möglich ist festzustellen, an welcher Stelle des Balkens sich der Schieber jeweils befindet.

Die Abstände zwischen den benachbarten Platten der jeweiligen Reihe müssen eingehalten werden, welche nicht beliebig klein gemacht werden können. Dies führt unter anderem dazu, dass die Genauigkeit, mit der die Ermittlung der jeweiligen Länge erfolgen kann, begrenzt ist. Ausserdem ist die Herstellung solcher vorbekannten Messeinrichtungen verhältnismässig kostspielig.

Die Aufgabe der vorliegenden Erfindung ist, diese sowie noch weitere Nachteile der genannten Messeinrichtung zu beseitigen.

Diese Aufgabe wird bei der Messeinrichtung der eingangs genannten Gattung erfindungsgemäss so gelöst, wie dies im kennzeichnenden Teil des Patentanspruchs 1 definiert ist.

Nachstehend werden Ausführungen der vorliegenden Erfindung anhand der beiliegenden Zeichnungen näher erläutert. Es zeigt:
Fig. 1 in einem vertikalen Schnitt einen Ausschnitt aus einer ersten Ausführung der vorliegenden Messeinrichtung, wobei diese Einrichtung einen durch einen Schieber hindurchgehenden Balken aufweist,
Fig. 2 einen horizontalen Schnitt durch die in Fig. 1 dargestellte Einrichtung, wobei der Balken parallel zueinander verlaufende Messbahnen aufweist, welche in Draufsicht dargestellt sind,
Fig. 3 vergrössert einen Ausschnitt aus einer der Messbahnen gemäss Fig. 2,
Fig. 4 in einer Draufsicht ein Halbzeug mit Kontaktfedern, welche zwischen einer der Innenflächen des Schiebers und dem Balken angeordnet sind,
Fig. 5 schematisch den Verlauf elektrischer Werte beim Ausschnitt gemäss Fig. 4 und
Fig. 6 einen elektrischen Schaltungskreis, welcher die Abtastung von Messwerten von der Bahn gemäss Fig. 4 schematisch verdeutlichen soll.

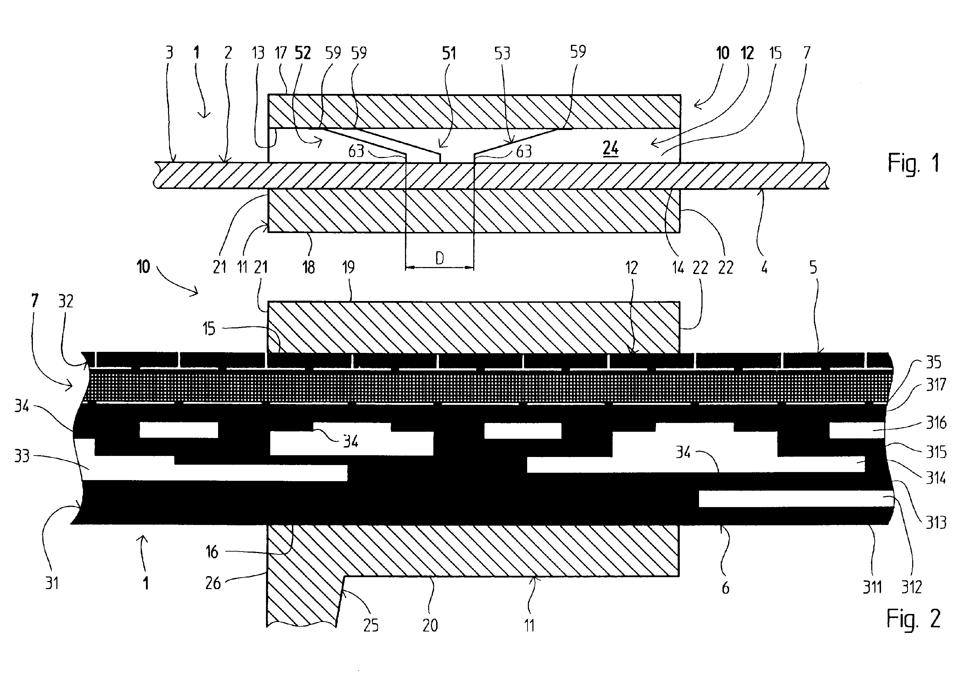

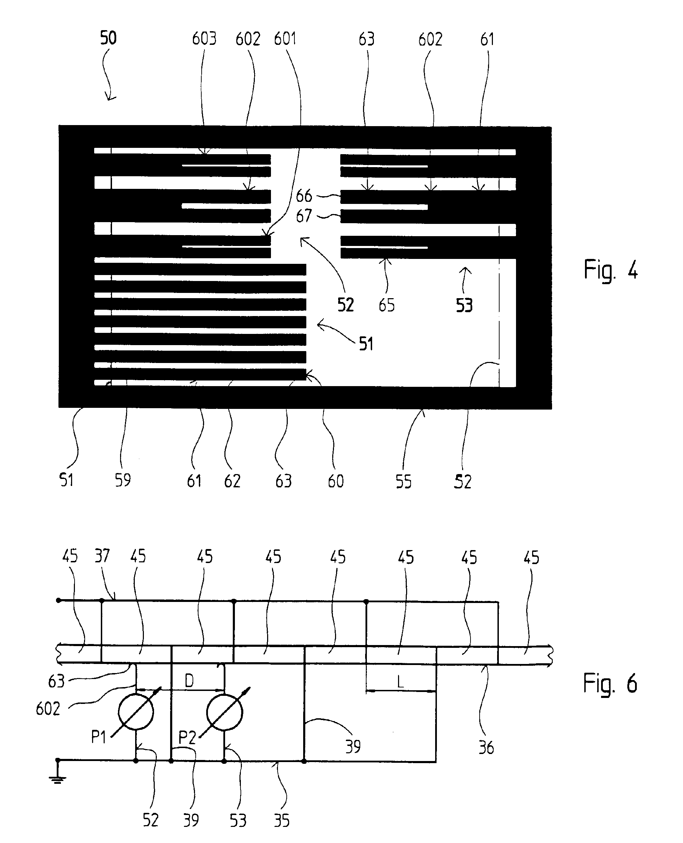

Die in Fig. 1 und 2 dargestellte Messeinrichtung umfasst einen Balken 1, welcher einen länglichen Grundkörper 2 aufweist. Dieser Grundkörpers 2 kann einen viereckförmigen Querschnitt haben, wobei im dargestellten Fall der Grundkörper 2 einen rechteckförmigen Querschnitt hat. Der Grundkörper 2 weist zwei längliche, parallel zueinander verlaufende und breite Aussenflächen 3 und 4 und zwei ebenfalls längliche, parallel zueinander verlaufende jedoch schmale Aussenflächen 5 und 6 auf. Die Schmalflächen 5 und 6 stehen praktisch rechtwinklig zu den Breitflächen 3 und 4.

Der Grundkörper 2 des Balkens 1 ist zweckmässigerweise aus einem biegefesten Material, wobei dieses Material im vorliegenden Fall ausserdem auch elektrisch isolierend ist. Falls die Messeinrichtung eine Schieblehre ist, so ist eine der Endpartien des Balkens 1 mit einem der an sich bekannten Messschnabel (nicht dargestellt) versehen. Im vorliegenden Fall wäre dies die in Fig. 1 bzw. 2 links liegende und in der Zeichnung nicht dargestellte Endpartie des Balkens 1, welche mit dem ersten Messschnabel versehen ist.

Die vorliegende Messeinrichtung umfasst ferner einen Schieber 10 mit einem Grundkörper 11. Dieser Grundkörper 11 ist im Grunde genommen quaderförmig, wobei die Aussenflächen dieses Grundkörpers 11 nicht unbedingt plan sein müssen. Beispielsweise aus ergonomischen Gründen können die Aussenflächen des Grundkörpers 11 an die Form der diesen Schieber 10 betätigenden Hand angepasst sein. Aus den Aussenflächen des Quaders können Betätigungselemente der Messeinrichtung ragen usw.

Im Schieber 10 ist eine durchgehende Oeffnung 12 ausgeführt, durch welche der Balken 1 hindurchgeht. Der Querschnitt dieser Oeffnung 12 ist im wesentlichen viereckförmig, wobei im dargestellten Fall der Oeffnungsquerschnitt rechteckförmig ist. Eine solche Oeffnung 12 weist demnach zwei längliche und breite Innenflächen 13 und 14 auf, welche praktisch parallel zueinander verlaufen. Die Schieberöffnung 12 weist ferner zwei ebenfalls längliche jedoch schmale Innenflächen 15 und 16 auf, welche parallel zueinander verlaufen und welche zu den breiten Innenflächen 13 und 14 dieser Oeffnung 12 praktisch rechtwinklig stehen.

Der Schieber 10 hat ferner zwei breite Aussenflächen 17 und 18, welche praktisch parallel zu den breiten Innenflächen 13 und 14 der Schieberöffnung 12 verlaufen, sowie schmale Aussenflächen 19 und 20, welche praktisch parallel zu den schmalen Innenflächen 15 und 16 der Schieberöffnung 12 verlaufen. Der Schieber 10 weist ferner Stirnflächen 21 und 22 auf, welche zu den genannten Flächen 13 bis 20 desselben senkrecht stehen. In jeder dieser Stirnflächen 21 bzw. 22 befindet sich eine der Mündungen der durchgehenden Schieberöffnung 12.

Wenn die Messeinrichtung als eine Schieblehre ausgeführt ist, dann ist der zweite Messschnabel 25 der Schieblehre am Schieber 10 angebracht. Im dargestellten Fall bildet dieser Messschnabel 25 einen Ausläufer aus der in Fig. 2 unten liegenden schmalen Aussenfläche 20 des Schiebers 10, wobei in Fig. 2 nur der sich an den Schiebergrundkörper 11 unmittelbar anschliessende Abschnitt dieses Messschnabels 25 dargestellt ist. Jene Fläche 26 dieses Messschnabels 25, welche zum Aufliegen auf dem zu messende Stück bestimmt ist, liegt in der Ebene der in Fig. 2 links dargestellten Stirnfläche 21 des Schiebers 10.

Die Breite der breiten Innenflächen 13 und 14 der durchgehenden Oeffnung 12 entspricht der Breite der Breitflächen 3 und 4 des Balkens 1 derart, dass der Balken 1 zwischen den Schmalflächen 15 und 16 der Schieberöffnung 12 praktisch spielfrei geführt wird. Dabei liegt die untere Breitfläche 4 des Balkens 1 auf der unteren breiten Innenfläche 14 der Schieberöffnung 12 auf. Die Höhe der Schieberöffnung 12 ist so gewählt, dass es einen Freiraum 24 zwischen der oberen Breitfläche 3 des Balkens 1 und der oberen breiten Innenfläche 13 der Schieberöffnung 12 gibt.

Die Messeinrichtung umfasst ferner Mittel zur Abtastung und zur Auswertung der Lage des Balkens 1 gegenüber dem Schieber 10. Jener Abschnitt dieser Mittel, in welchem die Auswertung der abgetasteten Werte erfolgt, ist als eine elektronische Schaltungsanordnung ausgeführt, welche einer an sich bekannten Art sein kann. Im Grundkörper 11 des Schiebers 10 ist zumindest ein Hohlraum (nicht dargestellt) ausgeführt, in welchem diese Schaltungsanordnung untergebracht ist. Der Schieber 10 weist auch eine Vorrichtung zur Ausgabe der Messwerte auf. Diese kann als ein an sich bekanntes Display oder/und als ein elektrischer Anschluss ausgeführt sein, über welchen die abgetasteten oder die bereits ausgewerteten Informationen einem Computer oder einem anderen Gerät zugeführt werden können.

Jener Teil der genannten Mittel, welche zur Abtastung von Messwerten bestimmt ist, umfasst unter anderem zumindest eine Skala 7, welche dem Balken 1 zugeordnet ist. Im dargestellten Fall ist die erste Breitfläche 3 des Balkens 1 mit der Skala 7 versehen.

Die Skala 7 erstreckt sich in der Längsrichtung des Balkens 1 und sie ist im dargestellten Fall als eine elektrisch bzw. elektronisch abtastbare Skala 7 ausgeführt. Es ist jedoch ohne weiteres möglich, dass die zweite Breitfläche 4 des Balkens 1 mit einer Skala 7 versehen ist, und zwar zusätzlich zur Skala 7 an der ersten Breitfläche 3, oder alternativ dazu. Die Skala 7 kann auch im Bereich zumindest einer der Schmalseiten 5 bzw. 6 des Balkens 1 ausgeführt sein, und zwar zusätzlich zur Skala 7 an zumindest einer der Breitseiten 3 bzw. 4, oder alternativ zu diesen. Die zusätzliche Skala kann so ausgeführt sein, dass sie auch elektrisch bzw. elektronisch abtastbar ist. Oder diese zusätzliche Skala kann einer anderen und beispielsweise bekannten Art sein.

Die Skala bzw. Hauptskala 7 ist so ausgeführt, dass sie erlaubt, die absolute Position des Schiebers 10 gegenüber dem Balken 1 zu ermitteln, und zwar sogar genauer, als dies gemäss dem Stand der Technik bisher möglich war. Die Skala 7 weist zwei geradlinig verlaufende Bahnen 31 und 32 auf, welche nebeneinander angeordnet sind und parallel zueinander liegen.

Die erste Skalenbahn 31 weist eine Kodierung auf und sie dient zur digitalen Grobbestimmung der Lage des Schiebers 10 gegenüber der Länge des Balkens 1. Die Kodierung umfasst nebeneinander liegende Spuren 311, 312, 313, 314, 315, 316 und 317. Jede dieser Spuren besteht aus aufeinander folgenden Abschnitten, welche abwechselnd aus einem elektrisch leitenden und aus einem elektrisch nicht leitenden Material sind. Diese Anordnung kann man im vorliegenden Fall in der Weise bewerkstelligen, dass nur bestimmte Abschnitte der Oberfläche 33 des Balkens 1, welcher aus einem elektrisch isolierenden Material ist, mit einem Ueberzug 34 aus einem elektrisch leitenden Material versehen sind. Die Abschnitte 34 aus einem elektrisch leitenden Material sind an eine Spannungsquelle anschliessbar, wobei die durch diese Quelle gelieferte Spannung im vorliegenden Fall als Vref bezeichnet ist.

Die Länge der leitenden Abschnitte 34 und der nicht leitenden Abschnitte 33 sowie die Folge dieser Abschnitte 33 und 34 in der Längsrichtung der jeweilige Spur 311 bis 317 sind bei diesen Spuren 311 bis 317 unterschiedlich gewählt. Diese Wahl ist so getroffen, dass die Kombination der elektrisch leitenden Abschnitte 34 und der elektrisch nicht leitenden Abschnitte 33 der benachbarten Spuren 311 bis 317 an einer bestimmten Stelle der Länge des Balkens 1 und senkrecht zur Länge dieser Skalenbahn 31 für diese Stelle der Länge des Balkens 1 kennzeichnend ist. Ausgehend von dieser Anordnung der Abschnitte 33 und 34 kann die absolute Position des Schiebers 10 gegenüber der Längsrichtung des Balkens 1 grob ermittelt werden. Systeme solcher Kodeteilungen sind bei Skalen bereits bekannt und deswegen dürfte es nicht nötig sein, die Wirkungsweise der in Fig. 2 gezeigten kodierten Skalenbahn 31 näher zu erläutern.

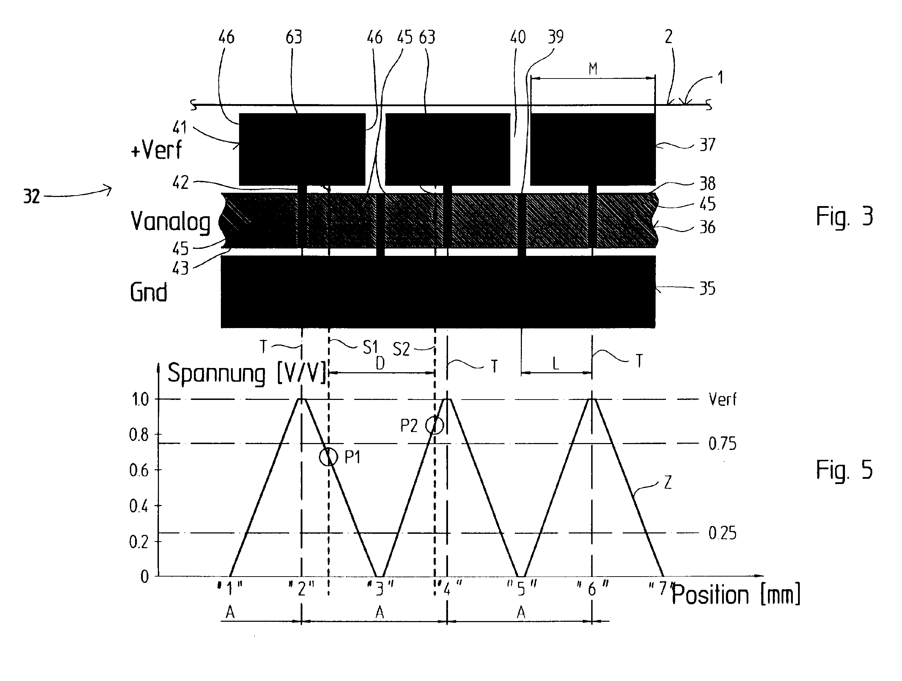

Die zweite Skalenbahn 32 (Fig. 2 und 3) ist so ausgeführt, dass sie eine analoge Feininformation über die Position des Schiebers 10 gegenüber dem Balken 1 liefern kann. Diese zweite Skalenbahn 32 umfasst geradlinige und nebeneinander angeordnete Spuren 35, 36 und 37, welche zueinander sowie zur Längsrichtung des Balkens 1 und somit auch zur ersten Skalenbahn 31 parallel verlaufen. Die erste Spur 35 dieser zweiten Skalenbahn 32 ist aus einem elektrisch leitenden Material und sie erstreckt sich zusammenhängend über die ganze Länge des Balkens 1. Diese Spur 35, welche auch als gemeinsame Spur bezeichnet werden kann, ist an die 0-Klemme einer Quelle angeschlossen, welche die Gleichspannung Vref liefern kann.

An jener Seite der gemeinsamen Spur 35, welche von der ersten Skalenbahn 31 abgewandt ist, befindet sich die zweite Spur 36 der zweiten Skalenbahn 32. Diese zweite Spur 36 ist aus einem ohmschen Material, d.h. aus einem Material, welches einen erheblichen ohmschen Widerstand aufweist. Diese Widerstandsspur 36 erstreckt sich ebenfalls über die gesamte Länge des Balkens 1, wobei sich diese Widerstandsspur 36 in einem Abstand von der gemeinsamen Spur 35 auf dem Balken 1 aus einem isolierenden Material befindet.

In Abständen voneinander sind Brücken 39 aus einem leitenden Material auf dem isolierenden Balkengrundkörper 2 angeordnet, welche sich zwischen der gemeinsamen Spur 35 und der Widerstandsspur 36 erstrecken. Diese Brücken 39 können auch als Ausläufer aus dem Material der gemeinsamen Spur 35 ausgeführt sein. Diese Brücken 39 sind an das Widerstandsmaterial der mittleren Spur 36 galvanisch angeschlossen, sodass elektrischer Strom zwischen den Brücken 39 und dem Widerstandsmaterial 36 fliessen kann. Die Brücken 39 sind auf der Widerstandsschicht 36 oder unter dieser angeordnet und sie sind so lang, dass sie die Widerstandsspur 36 überqueren. Das freie d.h. von der gemeinsamen Spur 35 abgewandte Ende der Brücken 39 liegt dabei im Bereich der von der gemeinsamen Spur 35 abgewandten Randkante 38 der Widerstandsspur 36. Die Abstände zwischen den Brücken 39 sind zweckmässigerweise alle gleich gross.

Die dritte Spur 37 der zweiten Bahn 32 liegt an der von der gemeinsamen Spur 35 abgewandten Seite der Widerstandsspur 36. Diese Spur 37 besteht aus Segmenten 41, welche aus einem elektrisch leitenden Material sind, wobei die Segmente 41 auf dem Balkengrundkörper 2 aus einem elektrisch isolierenden Material in Abständen 40 voneinander angebracht sind. Die einzelnen Segmente 41 sind somit voneinander sowie von den übrigen Spuren dieser Skala 7 elektrisch isoliert. Das jeweilige Segment 41 kann einen viereckförmigen Umriss haben, wobei diese Kontur im in Fig. 2 und 3 dargestellten Fall rechteckförmig ist. Die Segmente 41 sind so orientiert, dass die Seiten- bzw. Querkanten 46 derselben parallel zueinander verlaufen. Solche Segmente 41 bilden eine Reihe, welche sich in der Längsrichtung des Balkens 1 erstreckt. Die Länge M eines der Segmente 41, d.h. der Abstand zwischen den Querkanten 46 des Segmentes 41, ist kleiner als der Abstand zwischen zwei benachbarten Brücken 39. Dabei ist das jeweilige Segment 41 mittig bzw. symmetrisch zwischen zwei benachbarten Brücken 39 der ersten Brückengruppe angeordnet. Alle Segmente 41 der dritten Spur 37 sind an die Quelle der Gleichspannung Vref parallel anschliessbar.

Etwa vom mittleren Bereich des jeweiligen Segmentes 41 weg erstreckt sich je eine Brücke 42 eines zweiten Satzes der elektrisch leitenden Brücken der vorliegenden Einrichtung. Zwischen zwei benachbarten Brücken 42 ist ein Abstand A vorhanden. Die zweiten Brücken 42 können praktisch gleich ausgebildet sein wie die Brücken 39 der ersten Gruppe. Im Unterschied zu diesen ersten Brücken 39 erstrecken sich die zweiten Brücken 42 in entgegengesetzter Richtung. Folglich liegen die freien Endpartien der zweiten Brücken 42 im Bereich jener Kante 43 der Widerstandsspur 36, welche der gemeinsamen Spur 35 zugewandt liegt. In der Längsrichtung des Balkens 1 gesehen, wechseln die Brücken 39 der ersten Gruppe mit den Brücken 42 der zweiten Gruppe miteinander ab, sodass eine der ersten Brücken 39 zwischen zwei zweiten Brücken 42 liegt und umgekehrt.

Zwischen zwei benachbarten Brücken 39 und 42 erstreckt sich ein Abschnitt 45 der Widerstandsspur 36. Oder mit anderen Worten ausgedrückt, zu jeder Seite der jeweiligen Brücke 39 bzw. 42 befindet sich je ein Abschnitt 45 der an sich zusammenhängend verlaufenden Widerstandsspur 36. Die Brücken 39 und 42 unterteilen somit diese Widerstandsspur 36 in die einzelnen Abschnitte 45.

Wenn Vref an eines der Segmente 41 angelegt wird, dann kann Strom von diesem Segment 41 über die diesem zugeordnete Brücke 42 der zweiten Gruppe zu den zwei an diese Brücke 42 seitlich angeschlossenen Abschnitten 45 der Widerstandspur 36 fliessen. Hier teilt sich dieser Strom in zwei Teilströme, von welchen je einer durch den betreffenden Widerstandsabschnitt 45 bis zu jener Brücke 39 der ersten Gruppe gelangt, welche am anderen Ende des betreffenden Widerstandsabschnitte 45 angeschlossen ist. Durch diese ersten Brücken 39 gelangen die Teilströme bis zur gemeinsamen Spur 35.

Während des Durchflusses von Gleichstrom durch einen der Abschnitte 45 der Widerstandsspur 36 entsteht an diesem Widerstandsabschnitt 45 ein Spannungsabfall, welcher sich zwischen den sich an den Enden dieses Widerstandsabschnitt 45 angeschlossenen Brücken 39 und 42 erstreckt bzw. verteilt. Die zweite Brücke 42 befindet sich dabei auf dem Potential Vref und die erste Brücke 39 befindet sich auf dem Potential 0. Mit dem zunehmenden Abstand von der zweiten Brücke 42 sinkt das Potential an der jeweiligen Stelle des Widerstandsabschnittes 45 kontinuierlich und linear ab, bis dieses Potential im Bereich der ersten Brücke 39 gleich 0 ist.

Der kontinuierliche bzw. analoge Potentialabfall an den einzelnen und zwischen den benachbarten Brücken 39 und 42 liegenden Stellen des betreffenden Widerstandsabschnittes 45 wird zur genauen Ermittlung der Lage des Schiebers 10 gegenüber dem Balken 1 ausgenützt. Dazu ist es jedoch erforderlich, die Grösse der Spannung an der jeweiligen Stelle des Widerstandsabschnittes 45 abzutasten, welche der Lage des Schiebers 10 gegenüber dem Balken 1 entspricht.

Fig. 4 zeigt in einer Draufsicht ein Halbzeug 50, aus welchem die Mittel zur Abtastung der Skala 7 am Balken 1 hergestellt werden können. Dieses Halbzeug 50 weist einen flächenhaften Rahmen 55 auf. Im Inneren dieses Rahmens 51 befinden sich Gruppen 51, 52 und 53 von nebeneinander liegenden, länglichen Kontaktgliedern 60. Mit strichpunktierten Linien S1 und S2 sind in Fig. 4 Schnitte angedeutet, wo die Kontaktglieder 60, 601, 602 und 603 während der Herstellung der vorliegenden Einrichtung vom Rahmen 55 abgetrennt werden. Diese Endpartien 59 der genannten Kontaktglieder werden an entsprechenden Stellen der oberen breiten Innenfläche 13 des Schiebers 10 befestigt, wie dies in Fig. 1 angedeutet ist. Von diesen Stellen 59 am Schieber 10 führen Leiter (nicht dargestellt) zu jener Schaltungsanordnung der vorliegenden Einrichtung, in welcher die von den Kontaktgliedern 60, 601, 602 und 603 erhaltenen Signale zur Ermittlung des jeweiligen Messwertes ausgewertet werden können.

Das jeweilige Kontaktglied 60, 601, 602 und 603 weist einen streifenförmigen und federnden Grundkörper 61 auf. Dieser Grundkörper 61 umfasst die bereits genannte Endpartie 59, über die das Kontaktglied 60 am Schieber 10 befestigt ist. Der Grundkörper 61 umfasst ferner eine federnde Mittelpartie 62, welche aus der Ebene des Rahmens 51 herausgebogen ist. Wenn das Kontaktglied 60 am Schieber 10 montiert ist, dann verläuft dieser Mittelabschnitt 62 schräg von der Innenfläche 13 des Schiebers 10 gegen den Balken 1 hin und abwärts. Die freie Endpartie 63 des Kontaktglied-Grundkörpers 61 liegt auf einer der Spuren der Skala 7 auf und dadurch eine Berührungsverbindung zwischen dem Kontaktglied 60 usw. und der jeweiligen Stelle einer der Spuren der Skala 7 sicherstellt.

Der Grundkörper 61 der Kontaktglieder 60 der ersten Kontaktegruppe 51 ist als eine Flachfeder ausgeführt, wobei je eine dieser Flachfedern einer der Spuren 311 bis 317 der ersten Skalenbahn 31 zugeordnet ist. Die Längsrichtung des jeweiligen Kontaktgliedes 60 fällt mit der Längsrichtung der betreffenden Spur zusammen. Die Breite des Grundkörpers 61 des jeweiligen Kontaktgliedes 60 ist etwas kleiner als die Breite der darunter liegenden Spur 311 bis 317. Dies ermöglicht, dass sich die benachbarten Kontaktglieder 60 in Abständen voneinander anordnen lassen und dass sie am Schieber 10 voneinander isoliert befestigt sein können. Diese Kontaktglieder 60 sind so lang ausgeführt, dass die Kontaktstücke 63 derselben etwa in der Mitte der Länge dieser Kontaktanordnung 50 liegen.

Die jeweilige der übrigen Kontaktgruppen 52 bzw. 53 umfasst drei Kontaktglieder 601, 602 und 603, wobei je eines dieser Kontaktglieder einer der Spuren 35, 36 bzw. 37 der zweiten Skalenbahn 32 zugeordnet ist. Die ersten Kontaktglieder 601 der Kontaktgruppen 52 und 53 liegen auf der gemeinsamen Spur 35 wie Schleifkontakte auf. Die zweiten Kontaktglieder 602 schleifen auf der Widerstandsspur 36, während die dritten Kontaktglieder 603 auf den Segmenten 1 der dritten Spur 37 aufliegen können. Die Kontaktglieder 601 bis 603 dieser zwei Gruppen 52 und 53 sind im wesentlichen gleich ausgebildet wie die Kontaktglieder 60 der ersten Gruppe 51. Dies bedeutet, dass diese Kontaktglieder 601 bis 603 ebenfalls länglich und federnd sind. Im Unterschied zu den Kontaktgliedern 60 der ersten Gruppe 51 ist der Grundkörper 61 dieser Kontaktglieder 601 bis 603 kürzer als der Grundkörper 61 der Kontaktstücke 60 der ersten Kontaktgruppe 51.

Die Kontaktglieder 601 bis 603 der zwei übrigen Kontaktgruppen 52 und 53 sind einander gegenüber gerichtet. Da der Grundkörper 61 dieser Kontaktglieder 601 bis 603 kürzer ist als der Grundkörper 61 der Kontaktstücke 60 der ersten Kontaktgruppe 51, befinden sich die Kontaktstücke 63 bzw. die freien Endpartien der Kontaktglieder 601 bis 603 der einander gegenüberliegenden Kontaktgruppen 52 und 53 in einem Abstand D (Fig. 1) voneinander.

Die Grösse dieses Abstandes D zwischen den Endpartien 63 der Kontaktgruppen 52 und 53 am Schieber 10 ist entlang dem Balken 1 überall gleich gross, weil dieser Abstand D durch die Konstruktion des Schiebers 10 gegeben ist.

Da die Grösse des Uebergangswiderstandes zwischen den Kontaktgliedern 601 bis 603 dieser Gruppen 52 und 53 und dem darunter liegenden Widerstandsabschnitt 45 die Genauigkeit der Messung wesentlich beeinflussen kann, sind die freien Endpartien dieser Kontaktglieder 601 bis 603 gabelförmig ausgeführt. Folglich weist die freie Endpartie 63 des Grundkörpers 61 des jeweiligen Kontaktgliedes 601 bis 603 sich in einem Abstand voneinander befindliche Zinken 66 und 67, zwischen welchen sich ein Spalt erstreckt. Jeder der Zinken 66 und 67 trägt ein Kontaktstück 63. Die Zinken 66 und 67 machen die Auflage der Kontaktglieder 601 bis 603 auf den Spuren 35 bis 37 weicher und den Wert des Uebergangswiderstandes daher auch konstanter. Der Grundkörper 61 des mittleren Kontaktgliedes 602 ist breiter ausgeführt als bei den übrigen zwei Kontaktgliedern 601 und 603 dieser Gruppe 52 und 53.

In Fig. 5 befindet sich ein Diagramm, welches helfen soll, die Arbeitsweise der vorliegenden Einrichtung zu erläutern. Auf der X-Achse dieses Diagramms sind Längen aufgetragen, welche den Abmessungen der Einrichtung, insbesondere des Balkens 1 und des Schiebers 10 entsprechen. Der Massstab auf dieser X-Achse ist derselbe wie der Massstab jenes Ausschnittes aus der zweiten Skalenbahn 32, welcher in der über Fig. 5 liegenden Fig. 3 dargestellt ist. Auf der Y-Achse des Diagramms gemäss Fig. 5 sind Werte des Potentials ausgetragen, welches zwischen den Segmenten 41 und der gemeinsamen Spur 35 angelegt ist. Der lineare Verlauf des Potentialabfalls am jeweiligen und dazwischen liegenden Widerstandsabschnitt 45 ist im genannten Diagramm als eine schräg verlaufende Gerade angedeutet. Der Verlauf des Potentialabfalles entlang dem Balken 1 und über mehrere aufeinander folgende Widerstandsabschnitte 45 ist im genannten Diagramm als eine praktisch zickzack-förmig verlaufende Linie Z angedeutet.

Je eine der in Fig. 5 vertikal verlaufenden strichpunktierten Linien T geht durch eine der zweiten und zueinander benachbarten Brücken 42 am Balken 1 hindurch, welche in der darüber stehenden Fig. 3 dargestellt sind. Der Abstand zwischen diesen Linien T kann daher, entsprechend dem Abstand A zwischen den zweiten Brücken 42, ebenfalls mit A bezeichnet werden. Der Abstand D zwischen den Kontaktstücken 63 der Kontaktegruppen 52 und 53 ist kleiner als der Abstand A zwischen den benachbarten zweiten Brücken 42 am Balken 1, wie dies aus Fig. 5 ersichtlich ist. Der Abstand D beträgt im dargestellten Fall 3/4 von A. Dies deswegen, damit mindestens eines der Kontaktstücke 63 der Kontaktruppen 52 und 53 innerhalh der Grenzen von 25% und 75% des Potentials immer liegt.

Die zweiten Brücken 42 liegen am gleichen Potential wie die Segmente 41, weil sie an die Segmente 41 galvanisch angeschlossen sind. Wenn Vref an einem der Segmente 41 angelegt ist, dann weist jene Stelle der mittleren Spur 36, für welche die X-Koordinate "4" zutrifft, das volle Potential Vref auf. Dies deswegen, weil sich diese Stelle im Bereich einer der zweiten Brücken 42 befindet, die an die Segmente 41 der dritten Spur 37 und somit auch an die volle Vref galvanisch angeschlossen sind. Die auf der X-Achse mit "5" bezeichnete Stelle an der mittleren Spur 36 weist das Potential 0, weil sich diese Stelle im Bereich einer der ersten Brücken 39 befindet, die am 0-Potential der gemeinsamen Spur 35 liegen.

Die Kontaktstücke 63 der Kontaktglieder 601 bis 603 in der jeweiligen Kontaktegruppe 52 bzw. 53 liegen nebeneinander. Eine strichlierte Linie S1 bzw. S2 geht durch die Kontaktstücke 63 der jeweilige Kontaktgruppe 52 bzw. 53 hindurch. Die strichlierten Linien S1 und S2 in Fig. 5 verlaufen senkrecht zu den Kontaktgliedern 601 bis 603 der Abtastvorrichtung 50 sowie senkrecht zu den Spuren 35 bis 37 dieser Skalenbahn 32. Da die Kontaktglieder 601 bis 603 mit dem Schieber 10 fest verbunden sind, gibt die Lage der strichlierten Linien S1 und S2 hinsichtlich der Länge des Balkens 1 die jeweilige Stellung des Schiebers 10 gegenüber dem Balken 1 an.

Während des Betriebes dieser Einrichtung liegen die ersten Kontaktglieder 601 der zwei Kontaktegruppen 52 und 53 auf der leitfähigen und zusammenhängend ausgeführten gemeinsamen Spur 35 auf. Diese Spur 35 ist über die zwei ersten Kontaktglieder 601 dieser Kontaktegruppen 52 und 53 am Schieber 10 an den 0-Pol der Gleichspannungsquelle im Schieber 10 ununterbrochen angeschlossen.

Die dritten Kontaktglieder 603 der zwei Kontaktegruppen 52 und 53 sind an jene Klemme der Gleichspannungsquelle im Schieber 10 angeschlossen, welche die volle Spannung Vref liefern kann. Die Kontaktstücke 63 dieser dritten Kontaktglieder 603 können auf den Segmenten 41 der dritten Spur 37 aufliegen. Da sich die Kontaktstücke 63 der Kontaktglieder 603 dieser Gruppen 52 und 53 im Abstand D voneinander befinden, kann es vorkommen, dass die Kontaktstücke 63 des jeweiligen Kontaktgliedes 603 auf zwei benachbarten bzw. aufeinander folgenden Segementen 41 der dritten Spur 37 aufliegen, etwa wie dies in Fig. 3 dargestellt ist. Der Abstand D zwischen den Enden 63 der Kontaktstücke 603 ist mit der Länge M eines Segmentes 41 vergleichbar. Unter diesen Umständen sind auch jene Stellungen des Schiebers 10 möglich, in welchen die Kontaktstücke 63 eines der Kontakglieder 603 auf einem der Segmente 41 aufliegen, während die Kontaktstücke 63 des anderen Kontaktgliedes 603 im Spalt 40 zwischen zwei benachbarten Segmenten 41 auf dem nicht leitenden Material des Balkens 1 aufliegen.

Aehnliches gilt für die Kontaktstücke 63 der mittleren Kontaktglieder 602 der Gruppen 52 und 53, welche auf der Widerstandsspur 36 aufliegen. Unterschiede zum vorstehend beschriebenen Fall sind dadurch bedingt, dass die Länge L eines der Abschnitte 45 der Widerstandsspur 37 etwa nur die Hälfte von A bzw. M darstellt und dass sich die leitenden Brücken 39 und 42 auf der zusammenhängenden Widerstandsspur 37 befinden. Unter diesen Umständen kann es nicht vorkommen, dass die Kontaktstücke 63 der zweiten Kontaktglieder 602 der Gruppen 52 und 53 auf einem und demselben Widerstandsabschnitt 45 aufliegen. Höchstens kann es vorkommen, dass eines der Kontaktglieder 602 einen der Widerstandsabschnitte 45 und das andere Kontaktglied 602 eine der Brücken 39 bzw. 42 berührt. In allen anderen Stellungen des Schiebers 10 hat das jeweilige Kontaktglied 602 lediglich Kontakt mit einem der Widerstandsabschnitte 45.

Bei der in Fig. 5 dargestellten Stellung des Schiebers 10 befinden sich die Kontaktstücke 63 des auf dem betreffenden Widerstandsabschnitt 45 aufliegenden mittleren Kontaktgliedes 602 der links dargestellten Kontaktegruppe 52 auf einem Potential P1. Die Grösse dieses Potentials P1 ergibt sich als ein Kreuzungspunkt der ersten strichlierten Linie S1 mit der für diesen Widerstandsabschnitt 45 zutreffenden Potentialgeraden. Bei der genannten Stellung des Schiebers 10 ist das Potential P1 kleiner als 75% Vref.

Die Kontaktstücke 63 des auf dem betreffenden Widerstandsabschnitt 45 aufliegenden mittleren Kontaktgliedes 602 der rechts dargestellten Kontaktegruppe 53 liegen auf einem Potential P2. Die Grösse dieses Potentials P2 ergibt sich als ein Kreuzungspunkt der zweiten strichlierten Linie S2 mit der für diesen Widerstandsabschnitt 45 zutreffenden Potentialgeraden. Bei der dargestellten Stellung des Schiebers 10 ist das Potential P2 grösser als 75% Vref, weil die Kontaktstücke 63 des mittleren Kontaktgliedes 602 der rechts dargestellten Kontaktegruppe 53 an einer der zweiten Brücken 42 näher liegen als die Kontaktstücke 63 der links dargestellten Kontaktegruppe 52. Die in dieser Weise abgetasteten Werte der Potentiale P1 und P2 werden über die Kontaktglieder 602 der einander gegenüberliegenden Kontaktgruppen 52 und 53 zur Auswerteschaltung im Schieber 10 übermittelt.

Die momentane Grösse bzw. der momentane Wert des Potentials am jeweiligen Kontaktglied 602 kann mit Hilfe geeigneter Mittel gemessen und zu Messzwecken dann weiter verarbeitet werden. In Fig. 6 ist ein Prinzipschaltschema einer Schaltungsanordnung angedeutet, welche die Werte der Potentiale P1 und P2 an den Kontaktgliedern 602 ermitteln bzw. anzeigen kann. In dieser vereinfachten Darstellung sind Voltmeter P1 und P2 als Mittel zur Anzeige der Potentiale an den Kontaktgliedern 602 verwendet. In der Auswertevorrichtung der vorliegenden Einrichtung dienen andere und ebenfalls an sich bekannte Mittel zur Verarbeitung der von den Kontaktgliedern 602 gelieferten elektrischen Signale. Die so verarbeiteten Signale werden in der Auswerteschaltung dann weiter verarbeitet, bis sich daraus wahrnehmbare Angaben über die jeweils gemessene Länge ergeben.

Wenn man den Schieber 10 entlang dem Balken 1 bewegt, dann gelangt das jeweilige Kontaktglied 602 der Gruppen 52 und 53 auf ein anderes Potentialniveau innerhalb der Länge L des darunter liegenden Widerstandsabschnittes 45. Die Grösse des Potentials der Kontaktglieder 602 an der jeweiligen Stelle des Balkens 1 liesse sich mit Hilfe der Schaltungsanordnung gemäss Fig. 6 veranschaulichen.

Es ist zweckmässig, den Verlauf des Potentials am jeweiligen Kontaktglied 602 der Gruppen 52 und 53 zu ermitteln, wenn sich der Schieber 10 im Bereich der Länge von vier benachbarten Widerstandabschnitten 45 bewegt. Dies ergibt für jedes der Kontaktglieder 602 der Kontaktgruppen 52 und 53 eine Kurve (nicht dargestellt), welche die Schwankungen des Potentials am jeweiligen Kontaktglied 602 der Kontaktgruppen 52 und 53 wiedergibt, wenn sich der Schieber 10 gegenüber dem Balken 1 bewegt. Diese Potentialkurven haben einen im wesentlichen trapezförmigen Verlauf und sie überlagern und schneiden sich.

Für jede Stelle der Länge des Bewegungsbereiches des Schiebers 10 ist eine und nur eine einzige Kombination der Werte P1 und P2 der Potentiale an den zweiten Kontaktgliedern 602 der Gruppen 52 und 53 kennzeichnend. Die Werte der Potetiale P1 und P2 für die jeweilige Stelle der Länge des Balkens 1 können auch als Schnittpunkte der zwei genannten Trapezkurven mit einer Geraden ermittelt werden, welche zu den Achsen der Sinuskurven senkrecht steht und deren Lage der Stellung des Schiebers 10 gegenüber dem Balken 1 entspricht. Dies ermöglicht, die jeweilige Lage des Schiebers 10 gegenüber dem Balken 1 im genannten Bewegungsbereich des Schiebers 10 anhand der während einer Messung festgestellten Kombinationen der Werte P1 und P2 eindeutig zu bestimmen.

Von der ersten Skalenbahn 31 erhält die Auswerteschaltung im Schieber 10 eine grobe Information über die Lage des Schiebers 10 gegenüber dem Balken 1, und zwar über die erste Gruppe 51 der Kontaktglieder 60, welche den Kode von der kodierten ersten Skalenbahn 31 abliest. Diese grobe Information erfasst jene Abschnitte der Länge des Balkens 1, deren Länge der Länge von vier Widerstandsabschnitten 45 entspricht. Diese grobe Information wird durch jene Informationen verfeinert bzw. präzisiert, welche von der zweiten Skalenbahn 32 herrühren und welche die Angaben über die Lage des Schiebers 10 innerhalb der Länge von vier Widerstandabschnitten 45 enthalten.

Da diese verfeinerten Informationen Werte an einer zusammenhängenden bzw. analogen Kurve sind, kann man den Schritt von einem dieser Werte zum benachbarten Wert beliebig klein machen. Daraus ergibt sich die aussergewöhnliche Präzision, mit welcher Längen anhand dieser Einrichtung gemessen werden können.

## Patentansprüche

1. Messeinrichtung mit einem Balken (1) und mit einem entlang diesem Balken bewegbaren Schieber (10), dadurch gekennzeichnet, dass zumindest eine der Oberflächen (3) des Balkens (1) mit zumindest einer Spur (36) aus einem Widerstandsmaterial versehen ist.

2. Messeinrichtung nach Patentanspruch 1, dadurch gekennzeichnet, dass die Oberfläche (3) des Balkens (1) zumindest eine Skala (7) mit zumindest zwei Bahnen (31,32) aufweist, dass diese Bahnen (31,32) sich parallel zur Längsrichtung des Balkens erstrecken, dass die erste Bahn (31) als eine strukturierte bzw. codierte Bahn bestehend aus elektrisch leitenden und elektrisch nicht leitenden Materialabschnitten ausgeführt ist, dass die zweite Bahn die Spur (36) aus dem Widerstandsmaterial umfasst und dass diese Spur (36) als eine zusammenhängend verlaufende Materialspur ausgeführt ist.

3. Messeinrichtung nach Patentanspruch 2, dadurch gekennzeichnet, dass zu einer Seite der Widerstandsspur (36) eine zusammenhängende Spur (35) aus einem elektrisch leitfähigen Material auf dem Balken (1) angeordnet ist, dass zur anderen Seite der Widerstandsspur (36) eine Spur (37) parallel verläuft, welche aus aufeinander folgenden und voneinander isolierten Segmenten (41) aus einem elektrisch leitfähigen Material zusammengesetzt ist, dass zwei Gruppen von Brücken (39,42) am Balken (1) vorgesehen sind, dass diese Brücken (39,42) in Abständen voneinander liegen, entlang dem Balken (1) verteilt sind und miteinander abwechseln, dass die Brücken (39) der ersten Gruppe sich zwischen der leitenden Spur (35) und der Widerstandsspur (36) erstrecken, dass die Brücken (42) der zweiten Gruppe sich zwischen der Widerstandsspur (36) und den Segmenten (41) der dritten Spur (37) erstrecken und dass einer der Abschnitte (45) der Widerstandsspur (36) einerends an eine der Brücken (39) der ersten Gruppe und andernends an eine der Brücken (42) der zweiten Gruppe galvanisch angeschlossen ist, welche zur genannten Brücke (39) der ersten Gruppe benachbart liegt.

4. Messeinrichtung nach Patentanspruch 2, dadurch gekennzeichnet, dass der Schieber (10) eine Vorrichtung zur Abtastung der Skala (7) am Balken (1) sowie eine Vorrichtung zur Verarbeitung der abgetasteten Informationen zu Messwerten umfasst.

5. Messeinrichtung nach Patentanspruch 4, dadurch gekennzeichnet, dass die Vorrichtung zum Abtasten der Skala (7) Kontaktglieder (60;601,602,603) umfasst, welche am Schieber (10) einerends befestigt und an die Auswertevorrichtung angeschlossen sind, und dass die freien Endpartien (63) der Kontaktglieder auf den Spuren der Skala (7) aufliegen.
